(19) Europäisches Patentamt
European Patent Office
Office européen des brevets

(11) Numéro de publication: **0 078 505**
**B1**

(12) # FASCICULE DE BREVET EUROPEEN

(45) Date de publication du fascicule du brevet: **09.12.87**

(51) Int. Cl.⁴: **H 01 M 6/18,** H 01 B 3/12

(21) Numéro de dépôt: **82109950.4**

(22) Date de dépôt: **28.10.82**

(54) **Procédé de fabrication d'un électrolyte solide à base de polymères pour générateur électrochimique.**

(30) Priorité: **03.11.81 FR 8120568**

(43) Date de publication de la demande:
***11.05.83 Bulletin 83/19***

(45) Mention de la délivrance du brevet:
**09.12.87 Bulletin 87/50**

(84) Etats contractants désignés:
**BE CH DE FR GB IT LI NL SE**

(56) Documents cités:
**EP - A - 0 013 199**
**EP - A - 0 037 776**
**DE - B - 1 303 193**
**FR - A - 2 143 977**
**FR - A - 2 493 609**
**US - A - 3 249 830**
**US - A - 4 230 604**

**Le dossier contient des informations techniques présentées postérieurement au dépôt de la demande et ne figurant pas dans le présent fascicule.**

(73) Titulaire: **COMPAGNIE GENERALE D'ELECTRICITE Société anonyme dite:, 54, rue La Boétie, F-75382 Paris Cedex 08 (FR)**

(72) Inventeur: **Le Mehaute, Alain, 69, rue Julien Adam, F-91190 Gif sur Yvette (FR)**
Inventeur: **Hamaide, Thierry, c/o CNRS de Lyon Solaize, F-69000 Lyon (FR)**
Inventeur: **Crepy, Gilles, 409, Square du Dragon, F-91000 Evry 1 (FR)**
Inventeur: **Marcellin, Georges, 1, rue Gaston Gourdon, F-91270 Vigneux sur Seine (FR)**

(74) Mandataire: **Weinmiller, Jürgen et al, Lennéstrasse 9 Postfach 24, D-8133 Feldafing (DE)**

**EP 0 078 505 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de fabrication d'un électrolyte solide pour générateur électrochimique, comprenant d'une part au moins un premier polymère, dit polymère complexant, présentant dans son motif monomère au moins un hétéroatome, et d'autre part au moins un sel alcalin ionisable complexé dans ledit polymère.

Un tel électrolyte est connu, par exemple à partir du document EP-A 0 037 776.

Un certain nombre d'études portant sur de tels électrolytes ont été effectuées.

Ainsi, par le brevet français n° 2 442 513, il est connu un électrolyte de ce type dans lequel le polymère comporte en partie ou en totalité des homo et/ou copolymères, essentiellement à chaînes non réticulées, dérivées d'un ou plusieurs monomères comportant un hétéroatome apte à former des liaisons du type donneur-accepteur avec le cation du sel ionisable.

Cependant le complexe formé présente une forte tendance à cristalliser à la température ambiante, (diminution de la labilité entre chaînes), température qui se trouve au-dessous de la température de fusion des cristallites, ce qui réduit notablement la mobilité ionique à l'intérieur même du réseau.

La conséquence d'une telle propriété est une diminution notable de la conductivité ionique entre 100 °C et la température ambiante, diminution qui oblige donc à utiliser ces électrolytes solides polymères au-dessus de 80 °C, car il faut atteindre la température de fusion des zones cristallines pour obtenir une conductivité ionique suffisante, de l'ordre de $10^{-4}$ $(\text{ohm.cm})^{-1}$.

Par le document cité, EP-A 0 037 776, il est connu d'utiliser pour constituer le polymère complexant des polymères ou oligomères réticulés, dont la réticulation est provoquée par voie chimique au moyen de polyisocyanate, ces polymères présentant une température de transition vitreuse aussi basse que possible.

Cependant, de tels polymères se révèlent peu utilisables dans le cadre de leurs applications à température ambiante en tant qu'électrolytes solides dans les générateurs électrochimiques du fait de leur faible conductivité ionique et de l'instabilité des liaisons de réticulation vis-à-vis des électrodes, en particulier de l'électrode négative; c'est notamment le cas des liaisons de réticulation chimique di, tri ou multi isocyanates vis-à-vis du lithium, qui les réduit.

La présente invention a pour but de proposer un procédé de fabrication d'un électrolyte solide utilisable dans des générateurs électrochimiques fonctionnant à température ambiante.

Ce but est atteint selon l'invention par le procédé tel qu'il est caractérisé dans la revendication 1. En ce qui concerne des modes préférés de réalisation de ce procédé, référence est faite aux sous-revendications.

Il est à noter ici qu'on connaît par le document FR-A 2 143 977 une composition pour la préparation de résines conductrices d'électricité comprenant un réseau anionique et neutralisé par des cations, et des composés contenant des groupes époxydes. Un film conducteur d'électricité est réalisé par durcissement de la composition au moyen de deux réactions réticulaires simultanées de nature différente provoquées par voie physique, à savoir par chauffage ou irradiation aux radiations ionisantes ou aux rayons actiniques. La structure connue n'est pas complexante.

Dans le cadre de l'invention, la réticulation par voie physique évite l'introduction dans le mélange de polymères de fonctions de réticulation chimique instables vis-à-vis des matériaux constituant les électrodes, en particulier le lithium.

Le rayonnement peut consister plus spécifiquement en une émission ultraviolette, X, gamma, mais également il peut être du type électronique, neutronique ou alpha.

Le calandrage à chaud provoquant la réticulation peut s'effectuer dès 50 °C.

Le polymère complexant mis en œuvre comporte un ou plusieurs hétéroatomes, tels que l'oxygène ou l'azote.

La chaîne dudit polymère peut être constituée du motif suivant:

$$-(-CH_2-\underset{\displaystyle R'}{\underset{|}{C}H}-O-)_{\overline{n}}-$$

ou bien

$$-(-CH_2-\overset{\displaystyle R}{\overset{|}{N}}-CH_2-)_{\overline{n}}-$$

R et R′ peuvent être l'hydrogène, $CH_3$, $-(-CH_2-)-_n$ $CH_3$, une chaîne polyéther, par exemple une chaîne de polyoxyéthylène ou une chaîne de polyoxypropylène, ou une chaîne polyséquencée de polyéthers, ou une chaîne élastomérique.

La présence de telles chaînes entraîne notamment un désordre structural favorable à l'abaissement de la température de fusion des cristallites susceptibles de se former au sein du polymère complexant.

En ce qui concerne le sel ionisable, de formule MX, celui-ci est à titre nullement limitatif du type dans lequel:

$$M^+ = Li^+, Na^+, K^+, Ca^{2+}, NH_4^+.$$

$$X^- = I^-, ClO_4^-, BF_4^-, AsF_6^-, CF_3SO_3^-, CF_3CO_3^-, B_{12}H_{12}^{2-}, B_{10}Cl_{10}^{2-}, B\varphi_4^-,$$

φ désignant $C_6H_5$, ou une chaîne alkyle, ou une chaîne aryle.

Il est possible d'utiliser conjointement plusieurs sels ionisables.

De plus, il est avantageux qu'au moins une partie du sel ionisable comprenne un anion tel qu'il soit réticulé, après rayonnement, sur le second polymère. Cet anion pourra notamment être choisi dans le groupe formé par:

$CF_3CF_2COO^-$, $CF_3(CF_2)_6CF_2SO_3^-$, $CH_3(CH_2)_5\,CH_2SO_3^-$, $CH_2=CH-(CH_2)_3-SO_3^-$,

les polystyrènes sulfonates, les polymétacrylates.

Ces anions créent ponctuellement des barrières à la mobilité des autres anions ce qui se traduit par un frein à la cristallisation du polymère complexé, qui ne peut atteindre la neutralité électrique au sein de l'unité cristalline.

Le second polymère est avantageusement choisi dans le groupe formé par les élastomères du type polybutadiène-nitrile acrylique, polyéthylène-acrylate de méthyle, et les polyesters élastomériques.

Le second polymère est en proportion massique faible par rapport au polymère complexant, cette proportion pouvant se situer par exemple entre 1% et 25%.

A titre illustratif et nullement limitatif, on pourra utiliser comme second polymère le Perbunan® dans une proportion massique de 3,5%, le polymère complexant étant préférentiellement formé par un polyoxyéthylène (PEO) de masse moléculaire comprise entre 5000 et 7.000.000.

Selon l'invention, la réticulation peut également être faite après avoir introduit un monomère et/ou un macromère susceptible de servir d'agent greffable sur la chaîne et/ou d'agent pontant entre chaînes lors de la réticulation. C'est ainsi que l'on pourra utiliser à ce titre le butadiène, des éthers linéaires légers, le polyéthylène glycol, et également des composés comportant dans leur chaîne des acrylates, par exemple l'acrylate de méthyle, des acrylonitriles, des styrènes par exemple le butadiène-styrène, le styrène greffé sur une chaîne polyglyme ou polyéther, linéaire ou ramifiée. Chacun des agents précités pourra également être greffé sur une matrice minérale, telle que silice, alumine, zircone, verre, etc..., dans le but de modifier la structure des cristallites éventuellement formées dans le polymère complexant. A titre d'exemple, on pourra ajouter dans le mélange des polymères de la poudre de silice sur laquelle aura été préalablement greffé, suivant des techniques connues, un polyèthylène glycol.

Le but du second polymère à fonctions réticulables est multiple:

1) Il crée un désordre structural que contrôle l'intermiscibilité des polymères en mélange et donc contribue à tous les défauts de cristallisation que vont rencontrer les processus d'ordonnancement du complexe stoéchiométrique.

2) Il peut jouer un rôle surfactant vis-à-vis des cristallites éventuellement formées et donc contribuer à leur dispersion autant qu'à leur limitation en taille. Tel sera en particulier le cas lors de la copolymérisation sous rayonnement de composés acryliques (lyophiles) et de macromères contenant une chane oligomérique complexante.

3) Il crée un micro réseau local capable d'emprisonner la forme amorphe et conductrice de la chaîne complexante et de la conserver sans recristallisation.

4) On a pu constater également que dans certains cas le second polymère pouvait présenter des propriétés complexantes vis-à-vis du sel ionisable par exemble lorsqu'il comporte des polyglymes.

L'irradiation peut être effectuée sur une membrane, à l'état solide ou sur un gel comportant le mélange de polymères et le sel ionisable électrolytique.

Dans le mélange soumis à l'irradiation on peut également ajouter en proportions massiques inférieures à 10%, des phtalocyanines de lithium ou de lutétium et également des porphines, des porphyrines, ou de façon générale des arènes, dans le but d'améliorer la conductivité de l'électrolyte et d'en modifier éventuellement la coloration.

Selon l'invention, la réticulation sous rayonnement est effectuée sur le mélange chauffé jusqu'à la température de fusion des domaines cristallins, le polymère complexant étant donc alors porté dans un état essentiellement amorphe caractérisé par un état fondu de la majorité des domaines précités. On refroidit ensuite jusqu'à la température ambiante.

On fige dans ce cas la forme amorphe à la température ambiante en conservant donc toutes les propriétés texturales qui sont souhaitées pour obtenir une bonne conductivité à la température ambiante. Il est à remarquer que la mise en température qui exige alors simplement de dépasser la température de transition vitreuse ou de fusion de la majorité des cristallites peut être faite sous rayonnement infrarouge ou UV.

Selon encore un autre aspect de l'invention, la réticulation sous rayonnement peut être effectuée sur le mélange des polymères, tel que précédemment défini, additionné d'une masse active, le rapport pondéral entre les masses polymères et sel d'une part et la masse active d'autre part étant compris entre 0,001 et 10.

De la sorte, on réalise un ensemble composite électrode-électrolyte solide.

A titre nullement limitatif, dans le cas d'une électrode positive, la masse active peut comporter $TiS_2$, S, $Li_xFeS_2$ avec $O < x \leqslant 2$, $NiPS_3$, $V_6O_{13}$, $WO_3$, $MoO_3$, $V_2O_5$, $MnO_2$, des mélanges de $PbO_2$ et $Bi_2O_3$ ainsi que des polymères carbone-fluor, des polyacétylènes, ou des polypyrroles.

Dans le cas d'une électrode négative, la masse active peut comporter des alliages métalliques de type LiAl, LiB, LiMg et toutes les compositions non stoéchométriques qui en dérivent.

Selon une autre caractéristique de l'invention on peut également charger le mélange des polymères avec un électrolyte solide minéral tel que l'alumine béta ou $Li_3N$ par exemple.

On va donner dans ce qui suit quelques exemples de réalisation d'électrolytes solides et de batteries solides selon l'invention.

Exemple 1 (selon l'art antérieur)

Dans 40 $cm^3$ d'acétonitrile on introduit 700 mg de polyoxyéthylène (POE) dont la masse molaire est de $4 \times 10^6$, 300 mg de $LiClO_4$ et 50 mg de phtalocyanine de lithium.

Ce mélange est alors coulé dans un moule et évaporé en boîte à gant durant 15 jours pour évacuer l'acétonitrile.

La membrane d'électrolyte ainsi obtenue est chauffée à 100 °C pendant 1 heure puis mise sous

irradiation (1 h sous rayonnement X). La membrane irradiée est montée dans un générateur électrochimique dont l'électrode négative comporte du lithium et l'électrode positive $NiPS_3$. La masse active positive $NiPS_3$, est additionnée de 50% en poids de l'électrolyte solide précédent, non irradié, en vue d'assurer sa conductivité ionique.

5 heures après le montage, ce générateur ne peut être déchargé à la température ambiante. Par contre, on peut le décharger à partir de 80 °C; on obtient un rendement de 100% sous 30 µA à 80 °C. Le retour à la température ambiante conserve les possibilités de décharge obtenues à 80 °C pendant au plus 5 heures.

La figure 1 donne les caractéristiques initiales tension (E) en volts, courant I en milliampères, après ce temps de stockage de 5 heures, d'un tel générateur pour diverses températures. La résistivité de l'électrolyte à température ambiante est supérieure à $10^7$ ohm.cm.

Exemple 2

On utilise comme polymère complexant du polyoxyéthylène (POE), de masse moléculaire $4.10^6$.

Le sel ionisable est $LiClO_4$.

La proportion de sel ionisable par rapport au polymère complexant est telle qu'à 8 atomes d'oxygène provenant du (POE) correspond 1 atome de Li.

Le second polymère est constitué par un polybutadiène-nitrile acrylique et plus précisément du Perbunan® – Référence 3807 NS 71 24 77/10 fourni par SAFIC ALCAN.

La proportion pondérale du second polymère par rapport au polymère complexant est voisine de 3,5%.

Le mélange des polymères et du sel ionisable est mis en solution dans l'acétonitrile.

La solution est alors coulée sur une surface plane et on évapore le solvant sous argon.

On réalise de cette manière une membrane d'environ 120 $cm^2$ d'épaisseur et d'une épaisseur voisine de 0,2 mm.

Après séchage, la membrane est chauffée vers 100 °C et on procède ensuite à une irradiation sous rayons X émis par une anti cathode de chrome, l'irradiation ayant lieu sur le spectre complet pendant 15 minutes.

La membrane électrolytique est montée ensuite dans un générateur bouton de 20 mm de diamètre et de 2 mm d'épaisseur, comportant une électrode négative à base de lithium et une électrode positive à base d'un mélange comprenant d'une part 50% de $NiPS_3$, et d'autre part 50% de (POE) et $LiClO_4$ non irradié.

L'ensemble de ces composants est mis en contact sous une tension de 2,5 kg au moyen d'un ressort spiralé.

On effectue régulièrement de faibles décharges pulsées sous diverses densités de courant. Les périodes de décharge sont échelonnées entre 1 heure et plusieurs semaines, et on examine la conservation des performances du générateur en stockage.

Toute recristallisation du polymère complexant est marquée par une baisse des performances en décharge pulsée.

On trace les courbes intensité I, en mA, en ordonnées, pour une surtension de 1,5 V, en fonction du temps t de stockage, en heures, en abscisses. La profondeur de décharge du générateur est faible dans tous les cas.

– On obtient la courbe (A) de la figure 2.

Exemple 3 (donné à titre de référence)

Mêmes conditions opératoires que dans l'exemple 2 – mais sans irradiation.

– On obtient la courbe (B) de la figure 2.

Exemple 4

Mêmes conditions opératoires que dans l'exemple 2, mais on remplace le sel ionisable $LiClO_4$ par $LiCF_3SO_3$.

– On obtient la courbe (C) de la figure 2.

Exemple 5 (donné à titre de référence)

Mêmes conditions opératoires que dans l'exemple 4, mais sans irradiation.

– On obtient la courbe (D) de la figure 2.

Ces courbes (A), (B), (C), (D) montrent:

– dans le cas de l'exemple 3, il se produit une recristallisation à partir d'environ 80 heures de stockage à la température ambiante,

– dans le cas de l'exemple 5, la recristallisation intervient en moins d'une heure,

– dans le cas des exemples 2 et 4, correspondant à la mise en œuvre de l'invention, les performances évoluent très lentement sans recristallisation avant 1000 heures.

Exemple 6 (donné à titre de référence)

Le mélange de départ comprend:

– (POE) de masse moléculaire 4 000 000

– $LiClO_4$ dans les mêmes proportions que dans l'exemple 2

– un macromère à savoir du styrène greffé sur une chaîne polyglyme ayant 12 chaînons $-(-CH_2-CH_2-O-)-$, désigné par $SOE_{550}$.

La proportion de $SOE_{550}$, en poids, par rapport à (POE) est de 20%.

Les conditions de réalisation de la membrane et de sa mise en place dans le générateur sont les mêmes que dans l'exemple 2.

– On obtient la courbe (E) de la figure 3.

On constate ainsi que la présence d'un seul macromère est insuffisante pour retarder notablement la recristallisation.

Exemple 7 (donné à titre de référence)

Mêmes conditions opératoires que dans l'exemple 6, mais sans irradiation.

On obtient la courbe (F) de la figure 3. Les résultats sont nettement moins bons que dans l'exemple précédent.

Exemple 8

Mêmes conditions opératoires que dans l'exemple 6 mais on ajoute au mélange 3,6% en

poids de Perbunan®. On obtient la courbe (G) de la figure 3.

Exemple 8′

Mêmes conditions opératoires que dans l'exemple 8 mais la proportion de $SOE_{550}$ est de 5% et non plus de 20%. Le temps de recristallisation est alors voisin de la centaine d'heures.

Exemple 9 (donné à titre de référence)

Mêmes conditions opératoires que dans l'exemple 7 mais on ajoute 3,6% de Perbunan®. On obtient la courbe (H) de la figure 3.

Exemple 10

Mêmes conditions opératoires que dans l'exemple 8 mais le sel ionisable est constitué par $LiCF_3SO_3$. On obtient la courbe (I) de la figure 3.

On constate que les courbes correspondant à des mélanges non irradiés ou ne contenant pas de second polymère tendent à recristalliser rapidement.

Exemple 10′

Mêmes conditions opératoires que dans l'exemple 10, (POE, $LiCF_3SO_3$, $SOE_{550}$ −20% en poids par rapport à POE, Perbunan® −3,5% en poids par rapport à POE), mais la réticulation est obtenue par calandrage à chaud (0,1 mm à 60 °C) sans irradiation. On obtient les mêmes résultats que dans le cas de l'exemple 10.

Exemple 11

Mêmes conditions opératoires que dans l'exemple 10 mais la teneur en Perbunan® est passée de 3,5% à 10%. On obtient la courbe (J) de la figure 3. Les performances sont plus faibles que sur la courbe (I) mais la recristallisation est bloquée au même titre que dans l'exemple 10.

Exemple 12

Mêmes conditions opératoires que dans l'exemple 8 mais on ne met que 5% de $SOE_{550}$. La recristallisation a lieu environ après une centaine d'heures.

Exemple 13

Mêmes conditions que dans l'exemple 10 mais $SOE_{550}$ est remplacé par $SOE_{5000}$–113 chaînons $-(-O-CH_2-CH_2-)-$ sur un maillon styrène. Les résultats sont identiques à ceux de l'exemple 10.

Exemple 14

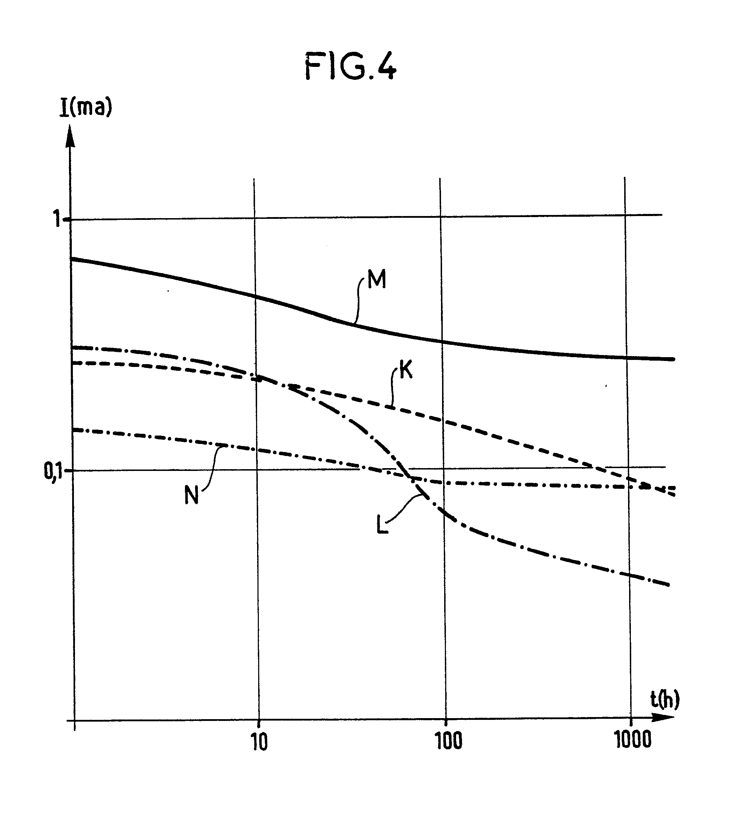

Mêmes conditions opératoires que dans l'exemple 2 mais on incorpore en outre dans le mélange de polymères un agent pontant constitué par un polyéther linéaire bi styrénique aux extrémités connu sous la référence $(V_2PE)_{6800}$. La proportion pondérale de cet agent par rapport à (POE) est de 20%. On obtient la courbe (K) de la figure 4.

Exemple 15 (donné à titre de référence)

Mêmes conditions opératoires que dans l'exemple 14 mais sans irradiation. On obtient la courbe (L) de la figure 4.

Exemple 16

Mêmes conditions opératoires que dans l'exemple 14 mais $LiClO_4$ est remplacé par $LiCF_3SO_3$. On obtient la courbe (M) de la figure 4.

Exemple 17 (donné à titre de référence)

Mêmes conditions que dans l'exemple 16 mais sans irradiation. On obtient la courbe N de la figure 4.

Exemple 18

Mêmes conditions opératoires que dans l'exemple 2, mais on incorpore en outre dans le mélange des polymères de la phtalocyanine de lutétium. En outre la membrane est montée entre une électrode de lithium et une contre électrode constituée par un verre conducteur électronique de type à l'oxyde d'étain. Le polymère a alors la faculté de changer de couleur sous tension électrique.

Exemple 19

Dans le mélange décrit dans l'exemple 2, on incorpore 20% en poids d'alumine béta seconde au sodium. La performance moyenne obtenue est de 100 µA sur les générateurs et aucune recristallisation n'est observée après 1000 heures.

Exemple 20

Dans le mèlange décrit dans l'exemple 2, on ajoute 20% en masse d'une silice sur laquelle ont été greffés par voie chimique, selon un procédé connu, des chaînons complexants polyglymes constitués par des oligomères formés de 10 à 200 chaînons $-(-OCH_2-CH_2-)-$. Les résultats obtenus sont identiques aux résultats obtenus dans l'exemple 8.

Exemple 21

Mêmes conditions opératoires que dans l'exemple 2, mais le sel ionisable comprend, en poids:

90% $LiClO_4$

10% $CF_3CF_2COOLi$

On obtient les mêmes résultats que dans l'exemple 4.

Exemple 22

Mêmes conditions opératoires que dans l'exemple 21 mais $CF_3CF_2COOLi$ est remplacé par $CH_2=CH-(CH_2)_3-SO_3Li$. On obtient les mêmes résultats que dans l'exemple 10.

**Revendications**

1. Procédé de fabrication d'un électrolyte solide pour générateur électrochimique, comprenant d'une part au moins un premier polymère, dit polymère complexant, présentant dans son motif monomère au moins un hétéroatome, et d'autre part au moins un sel alcalin ionisable complexé dans ledit polymère, caractérisé par le fait qu'on réalise un mélange dudit polymère complexant avec au moins un second polymère intermiscible avec ledit polymère complexant, susceptible

d'être réticulé et choisi parmi les élastomères du type polybutadiène-nitrile acrylique, polyéthylène acrylate de méthyle et les polyesters élastomériques, puis on procède à la réticulation en la provoquant par voie physique dudit second polymère, le polymère complexant étant dans un état essentiellement amorphe pendant cette opération de réticulation du second polymère.

2. Procédé selon la revendication 1, caractérisé par le fait que la réticulation est réalisée par irradiation sous rayonnement.

3. Procédé selon la revendication 1, caractérisé par le fait que la réticulation est réalisée par calandrage à chaud.

4. Procédé selon l'une des revendications 1 à 3, caractérisé par le fait que le polymère complexant est porté dans un état essentiellement amorphe par chauffage à une température voisine de 100 °C.

5. Procédé selon l'une des revendications 1 à 4, caractérisé par le fait que l'hétéroatome entrant dans la constitution du polymère complexant est choisi parmi O et N.

6. Procédé selon la revendication 5, caractérisé par le fait que la chaîne du polymère complexant est formé soit du motif:

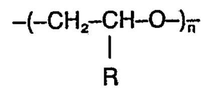

soit du motif:

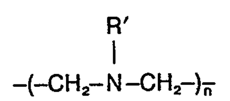

R et R′ représentant l'hydrogène, le radical $CH_3$, le radical $-(-CH_2-)-_n\ CH_3$, une chaîne présentant des fonctions polyéther.

7. Procédé selon l'une des revendications 1 à 6, caractérisé par le fait que le cation du sel ionisable est choisi parmi $Li^+$, $Na^+$, $K^+$, $Ca^{2+}$, $NH_4^+$, l'anion étant choisi parmi

$I^-$, $ClO_4^-$, $BF_4^-$, $AsF_6^-$, $CF_3SO_3^-$, $CF_3CO_3^-$, $B_{12}H_{12}^{2-}$, $B_{10}Cl_{10}^{2-}$, $CF_3CF_2COO^-$, $CF_3(CF_2)_6\ CF_2SO_3^-$, $CH_3(CH_2)_5\ CH_2SO_3^-$, $CH_2=CH-(CH_2)_3-SO_3^-$, les polystyrènes sulfonates, les polymétacrylates, $B\varphi_4^-$,

φ désignant $C_6H_5$, ou une chaîne alkyle, ou une chaîne aryle.

8. Procédé selon l'une des revendications 1 à 7, caractérisé par le fait que la proportion massique du second polymère par rapport au polymère complexant est comprise entre 1 et 25%.

9. Procédé selon l'une des revendications 1 à 8, caractérisé par le fait que l'on introduit dans le mélange, avant réticulation, un composé monomère et/ou macromère susceptible de servir d'agent greffable sur la chaîne et/ou d'agent pontant entre chaînes lors de la réticulation.

10. Procédé selon la revendication 9, caractérisé par le fait que ledit composé est choisi parmi le butadiène, les éthers linéaires oligomères, le polyéthylène glycol, des composés comportant dans leur chaîne des acrylates, des acrylonitriles, des styrènes, le styrène greffé sur une chaîne polyglyme ou polyéther, linéaire ou ramifiée.

11. Procédé selon l'une des revendications 9 et 10, caractérisé par le fait que ledit composé est greffé sur une matrice minérale.

12. Procédé selon l'une des revendications 1 à 11, caractérisé par le fait que préalablement à la réticulation on introduit dans le mélange des polymères, en proportion massique inférieure à 10%, un composé choisi parmi les phtalocyanines de lithium ou de lutétium, les porphines, les porphyrines, les arènes.

13. Procédé selon l'une des revendications 1 à 12, caractérisé par le fait que l'on incorpore au mélange des polymères, préalablement à l'irradiation, un électrolyte solide minéral.

14. Procédé de fabrication, selon l'une des revendications 1 à 13, d'un ensemble électrolyte-électrode, caractérisé par le fait que l'on introduit dans le mélange des polymères avant irradiation une masse active, le rapport pondéral entre les masses de polymères et de sel d'une part et ladite masse active d'autre part étant compris entre 0,001 et 10.

15. Procédé selon la revendication 14, caractérisé par le fait que ladite masse active est choisie parmi $TiS_2$, S, $Li_xFeS_2$, avec $0<x\leqslant 2$, $NiPS_2$, $V_6O_{13}$, $WO_3$, $MnO_3$, $V_2O_5$, $MnO_2$, des mélanges de $PbO_2$ et $Bi_2O_3$, des polymères carbone-fluor, des polyacétylènes, et des polypyrroles.

16. Procédé selon la revendication 14, caractérisé par le fait que ladite masse active est choisie parmi les alliages métalliques de type LiAl, LiB, LiMg et toutes les compositions non stoéchiométriques qui en dérivent.

**Claims**

1. A method of manufacturing a solid electrolyte for an electrochemical generator, comprising on the one hand at least one first polymer, called complexing polymer, presenting in its monomer pattern at least one heteroatom, and on the other hand at least one ionizable alkaline salt complexed in said polymer, characterized in that said complexing polymer is mixed with at least one second polymer miscible with said complexing polymer which second polymer can be reticulated and is chosen among the elastomeres of the type acrylic polybutadiene-nitrile, methyl polyethylene-acrylate and the elastomer polyesters, then reticulation is carried out by provoking it physically of said second polymer, the complexing polymer being in an essentially amorphous state during this reticulation operation of the second polymer.

2. A method according to claim 1, characterized in that the reticulation is performed by hot irradiation.

3. A method according to claim 1, characterized in that the reticulation is performed by hot calendering.

4. A method according to one of claims 1 to 3, characterized in that the complexing polymer is

brought to an essentially amorphous state by heating up to a temperature close to 100 °C.

5. A method according to one of claims 1 to 4, characterized in that the heteroatom entering into the constitution of the complexing polymer is chosen from O and N.

6. A method according to claim 5, characterized in that the chain of complexing polymer is formed either from the pattern:

$$-(-CH_2-\underset{\displaystyle R}{\underset{|}{CH}}-O-)_{n}-$$

or the pattern:

$$-(-CH_2-\overset{\displaystyle R'}{\overset{|}{N}}-CH_2-)_{n}-$$

where R and R′ represent hydrogen, the $CH_3$ radical, the $-(-CH_2-)-_n\ CH_3$ radical, a chain presenting polyether functions.

7. A method according to one of claims 1 to 6, characterized in that the ionizable salt cation is chosen from $Li^+$, $Na^+$, $K^+$, $Ca^{2+}$, $NH_4^+$, the anion being chosen from

$I^-$, $ClO_4^-$, $BF_4^-$, $AsF_6^-$, $CF_3SO_3^-$, $CF_3CO_3^-$, $B_{12}H_{12}^{2-}$, $B_{10}Cl_{10}^{2-}$, $CF_3CF_2COO-$, $CF_3(CF_2)_6CF_2SO_3^-$, $CH_3(CH_2)_5CH_2SO_3^-$, $CH_2=CH-(CH_2)_3-SO_3^-$, the sulfonate polystyrenes, the polymetacrylates, $B\varphi_4^-$, where φ designates $C_6H_5$, or an alkyl chain, or an aryl chain.

8. A method according to one of claims 1 to 7, characterized in that the content by weight of the second polymer in relation to the complexing polymer lies in the range 1 to 25%.

9. A method according to one of claims 1 to 8, characterized in that a monomer and/or macromer compound capable to act as an agent which can be grafted onto the chain and/or as an agent which can bridge the chains during reticulation is introduced into the mixture prior to the reticulation.

10. A method according to claim 9, characterized in that said compound is chosen from butadiene, the light linear ethers, the glycol polyethylene, compounds including in their chain acrylates, acrylonitriles, styrenes, the styrene grafted onto a polyglymous or polyester chain, linear or branching.

11. A method according to one of claims 9 and 10, characterized in that said compound is grafted onto a mineral matrix.

12. A method according to one of claims 1 to 11, characterized in that prior to the reticulation, a compound chosen from the lithium or lutetium phtalocyanides, the porphines, the porphyrines, the arenes is inserted into the polymer mixture in a mass proportion of less than 10%.

13. A method according to one of claims 1 to 12, characterized in that a solid mineral electrolyte is incorporated into the polymer mixture prior to irradiation.

14. A method of manufacturing an electrolyte-electrode unit according to one of claims 1 to 13, characterized in that an active mass is introduced into the polymer mixture prior to irradiation, the weight ratio between the polymer and salt mass on the one hand and said active mass on the other hand lying in the range between 0,001 and 10.

15. A method according to claim 14, characterized in that said active mass is chosen from $TiS_2$, S, $Li_xFeS_2$, with $O<x\leqslant 2$, $NiPS_2$, $V_6O_{13}$, $WO_3$, $MoO_3$, $V_2O_5$, $MnO_2$, mixtures of $PbO_2$ and $Bi_2O_3$, fluorocarbon polymers, polyacetylenes, and polypyrroles.

16. A method according to claim 14, characterized in that said active mass is chosen from the metal alloys of the type LiAl, LiB, LiMg and all non-stoechiometric compounds derived therefrom.

**Patentansprüche**

1. Verfahren zur Herstellung eines festen Elektrolyten für einen elektrochemischen Generator, mit einerseits mindestens einem ersten Polymer, genannt komplexierendes Polymer, das in seinem monomeren Motiv mindestens ein Heteroatom aufweist, und andererseits mindestens einem in diesem Polymer komplexierten ionisierten Alkalisalz, dadurch gekennzeichnet, dass man eine Mischung dieses komplexierenden Polymers mit mindestens einem zweiten Polymer herstellt, das mit dem komplexierenden Polymer mischbar ist, das vernetzt werden kann und aus den Elastomeren des Typs Acryl-Polybutadiennitril, Methyl-Polyäthylenacrylat und den Elastomer-Polyestern ausgewählt wird, dann zur Vernetzung schreitet, indem man die Vernetzung des zweiten Polymers auf physischem Weg hervorruft, wobei das komplexierende Polymer sich während diesem Vernetzungsvorgang des zweiten Polymers in einem im wesentlichen amorphen Zustand befindet.

2. Verfahren nach Anspruch 1, dadurch gekennzeichnet, dass die Vernetzung durch Bestrahlung erfolgt.

3. Verfahren nach Anspruch 1, dadurch gekennzeichnet, dass die Vernetzung durch Heissglätten durchgeführt wird.

4. Verfahren nach einem der Ansprüche 1 bis 3, dadurch gekennzeichnet, dass das komplexierende Polymer durch Erhitzen auf eine Temperatur nahe 100 °C in einen im wesentlichen amorphen Zustand gebracht wird.

5. Verfahren nach einem der Ansprüche 1 bis 4, dadurch gekennzeichnet, dass das zur Bildung des komplexierenden Polymers gehörende Heteroatom aus O und N ausgewählt wird.

6. Verfahren nach Anspruch 5, dadurch gekennzeichnet, dass die Kette des komplexierenden Polymers entweder aus dem Motiv:

$$-(-CH_2-\underset{\displaystyle R}{\underset{|}{CH}}-O-)_{n}-$$

oder dem Motiv:

$$-(-CH_2-\overset{\displaystyle R'}{\overset{|}{N}}-CH_2-)_{n}-$$

gewählt wird, wobei R und R′ Wasserstoff, das Radikal $CH_3$, das Radikal $-(-CH_2-)-_n$ $CH_3$, eine Kette mit Polyäther-Funktionen darstellen.

7. Verfahren nach einem der Ansprüche 1 bis 6, dadurch gekennzeichnet, dass das Kation des ionisierbaren Salzes ausgewählt wird aus $Li^+$, $Na^+$, $K^+$, $Ca^{2+}$, $NH_4^+$, während das Anion ausgewählt wird aus
$I^-$, $ClO_4^-$, $BF_4^-$, $AsF_6^-$, $CF_3SO_3$, $CF_3CO_3^-$, $B_{12}H_{12}^{2-}$, $B_{10}Cl_{10}^{2-}$, $CF_3CF_2COO^-$, $CF_3(CF_2)_6CF_2SO_3^-$, $CH_3(CH_2)_5CH_2SO_3^-$, $CH_2=CH-(CH_2)_3-SO_3^-$, den Polystyrolsulfonaten, den Polymetacrylaten, $B\varphi_4^-$, wobei $\varphi$ $C_6H_5$ oder eine Alkylkette oder eine Arylkette bezeichnet.

8. Verfahren nach einem der Ansprüche 1 bis 7, dadurch gekennzeichnet, dass der Massenanteil des zweiten Polymers in bezug auf das komplexierende Polymer zwischen 1 und 25% liegt.

9. Verfahren nach einem der Ansprüche 1 bis 8, dadurch gekennzeichnet, dass man in die Mischung vor der Vernetzung eine monomere und/oder macromere Verbindung einführt, die als auf die Kette aufpfropfbares Agens oder als Brückenagens zwischen Ketten während der Vernetzung dienen kann.

10. Verfahren nach Anspruch 9, dadurch gekennzeichnet, dass die Verbindung ausgewählt wird aus dem Butadien, den oligomeren linearen Äthern, dem Polyäthylenglycol, Verbindungen, die in ihrer Kette Acrylate, Acrylonitrile, Styrole aufweisen wobei das Styrol auf eine Polyglym- oder Polyätherkette, linear oder verzweigt, aufgepfropft wird.

11. Verfahren nach einem der Ansprüche 9 und 10, dadurch gekennzeichnet, dass die Verbindung auf eine minerale Matrix aufgepfropft wird.

12. Verfahren nach einem der Ansprüche 1 bis 11, dadurch gekennzeichnet, dass vor der Vernetzung in die Polymer-Mischung in Massenanteilen von weniger als 10% eine Verbindung ausgewählt aus den Lithium- oder Lutetiumphtalocyaninen, den Porphinen, den Porphyrinen, den Arenen eingeführt wird.

13. Verfahren nach einem der Ansprüche 1 bis 12, dadurch gekennzeichnet, dass man in die Polymer-Mischung vor der Bestrahlung einen festen mineralischen Elektrolyten einführt.

14. Verfahren zur Herstellung einer Elektrolyt-Elektrode-Einheit nach einem der Ansprüche 1 bis 13, dadurch gekennzeichnet, dass man in die Polymer-Mischung vor der Bestrahlung eine aktive Masse einführt, wobei das Gewichtsverhältnis zwischen den Massen der Polymere und des Salzes einerseits und der aktiven Masse andererseits zwischen 0,001 und 10 liegt.

15. Verfahren nach Anspruch 14, dadurch gekennzeichnet, dass die aktive Masse ausgewählt wird aus $TiS_2$, S, $Li_xFeS_2$, mit $0<x\leqslant 2$, $NiPS_2$, $V_6O_{13}$, $WO_3$, $MoO_3$, $V_2O_5$, $MnO_2$, Mischungen von $PbO_2$ und $Bi_2O_3$, Fluorkohlenstoff-Polymeren, Polyacethylenen und den Polypyrrolen.

16. Verfahren nach Anspruch 14, dadurch gekennzeichnet, dass die aktive Masse ausgewählt wird aus den Metallegierungen des Typs LiAl, LiB, LiMg und allen nicht stoechiometrischen Zusammensetzungen, die daraus folgen.

FIG. 1

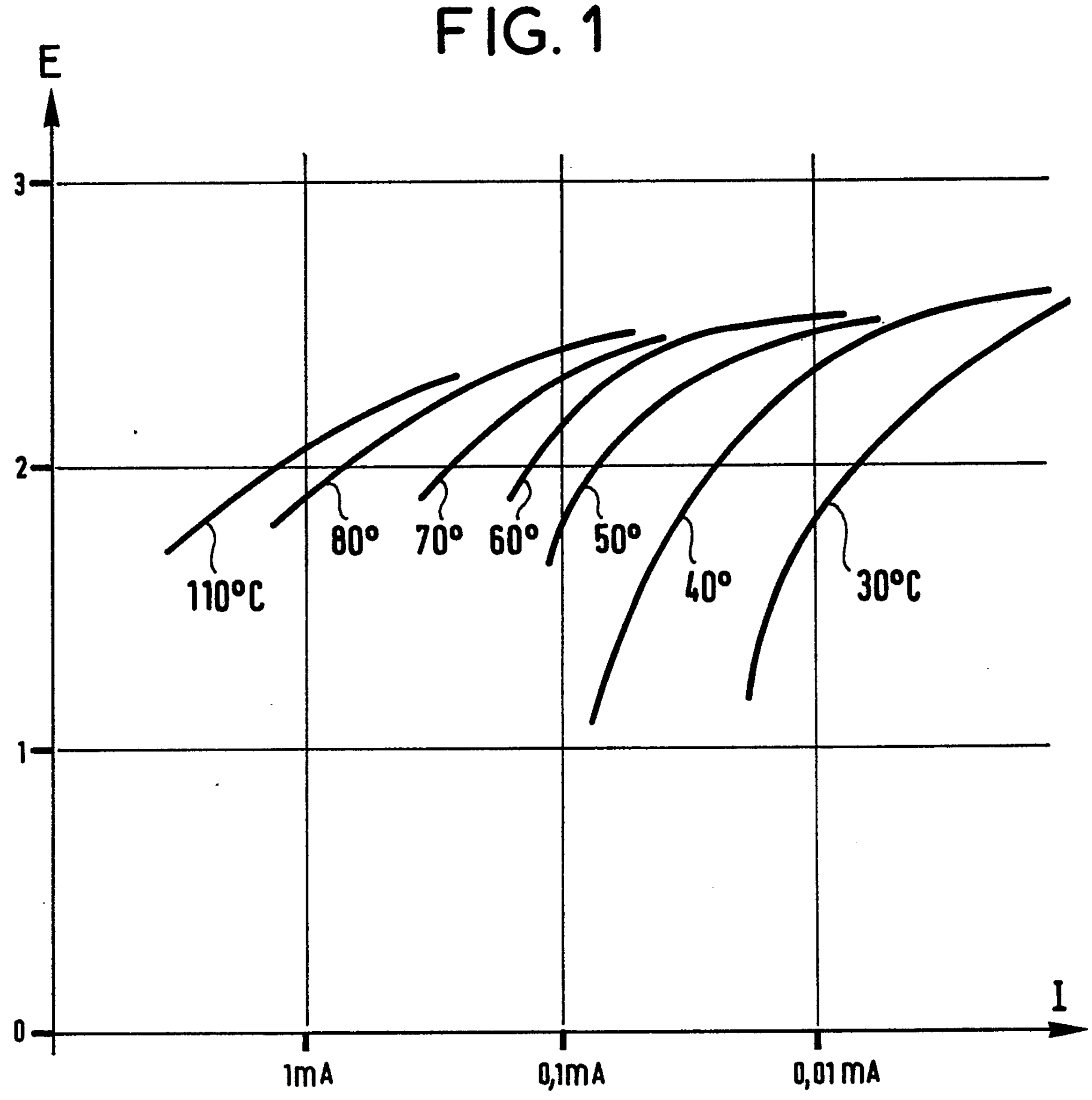

FIG.2

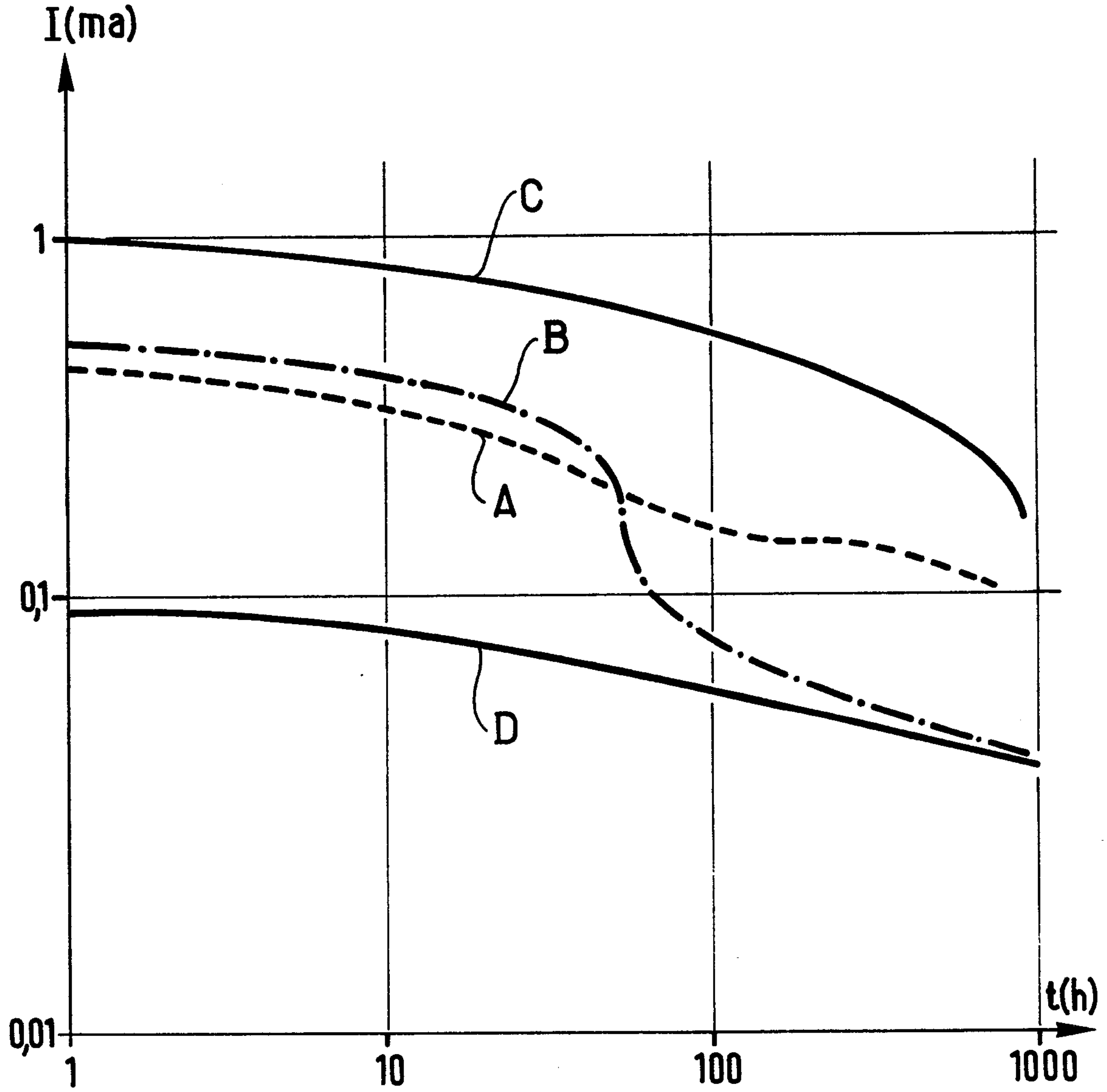

FIG.3

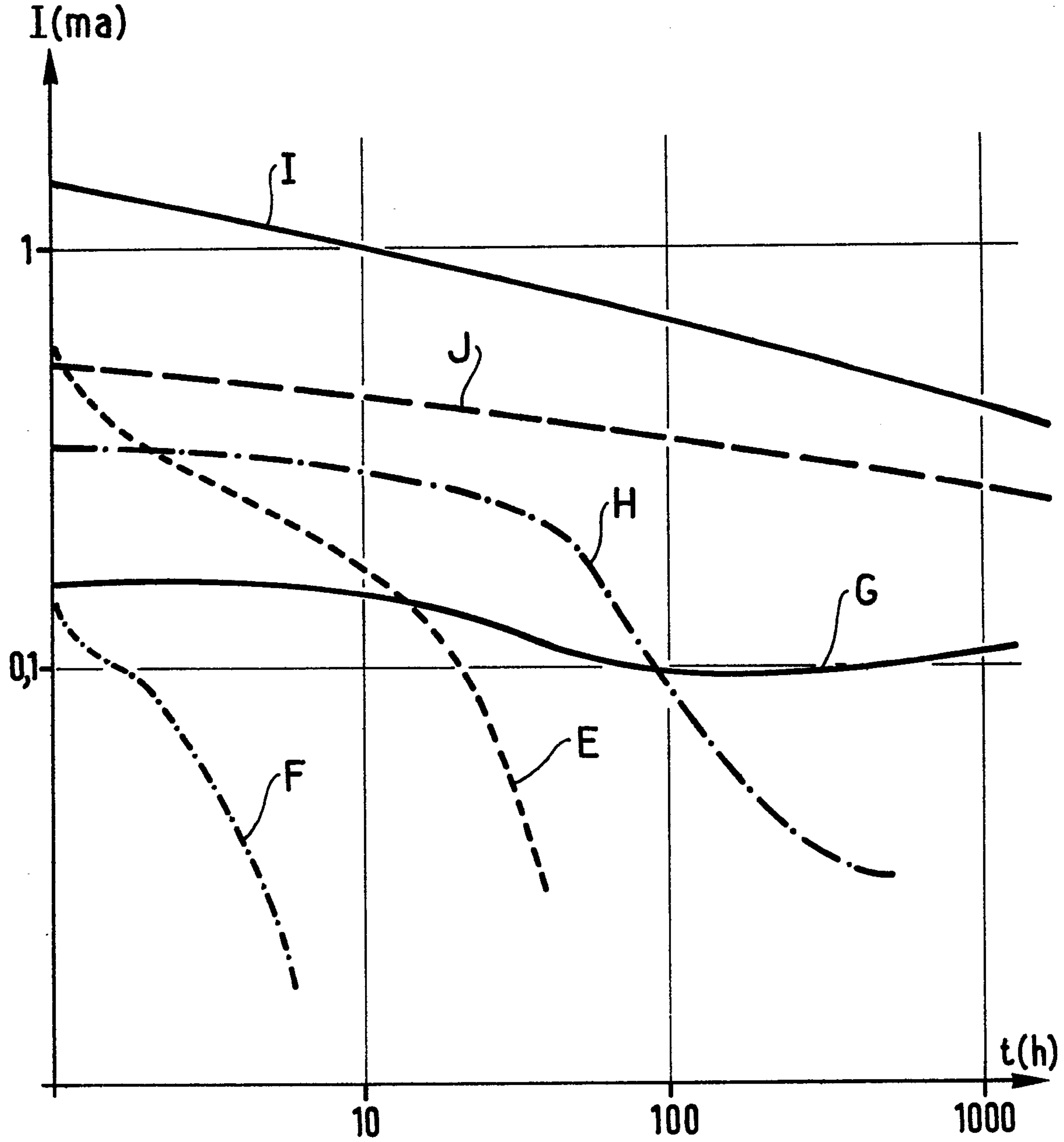

FIG.4